# EUROPEAN PATENT APPLICATION

(11) **EP 3 156 611 A1**
(43) Date of publication of application: **19.04.2017**
(21) Application number: 15189275.9
(22) Date of filing: 12.10.2015
(51) Int. Cl.: F01D 11/00, F16J 15/08

(54) **SEALING PART FOR A GAS TURBINE AND METHOD FOR MANUFACTURING SUCH A SEALING PART**

(71) Applicant: Siemens Aktiengesellschaft, 80333 München (DE)
(72) Inventor: Walker, Paul Mathew, Dunholme, Lincoln, LN2 3NE (GB)
(74) Representative: Maier, Daniel Oliver

(57) **Abstract**

It is described a sealing part (73) for a turbine section (18) of a gas turbine (10) to seal a gap (g) between two circumferentially adjacent rotor blades (64, 70), comprising: a body (71); a coating (69) applied on a surface of the body (71), the coating comprising a soft heat resisting material that can deform under centrifugal force of the rotating rotor blades (63, 70).

## Description

### Field of invention

The present invention relates to a sealing part for a turbine section of a gas turbine, to a rotor blade arrangement comprising the sealing part, to a gas turbine comprising the rotor blade arrangement and to a method for manufacturing a sealing part for a turbine section of a gas turbine.

### Art Background

A gas turbine comprises a compression section, a combustion section and a turbine section. In the compression section, air is compressed to high pressure and is guided to the combustion section comprising plural combustors that combust fuel in the presence of the compressed air. The combustion products are at high temperature and high pressure and drive plural rotor blades carried at rotor disks, in order to drive a rotation shaft. Due to the high pressure and high temperature, the components of the turbine section of the gas turbine need to be cooled during operation. Conventionally, a cooling fluid, in particular compressed air, that has been compressed by the compressor section is used for cooling. The cooling fluid is guided to the component to be cooled using cooling ducts that are partially provided within some components of the turbine section of the gas turbine. In particular, the rotor disks comprise cooling ducts in order to cool a platform section and/or a rotor blade, in particular by leading cooling air into an inside of the airfoil section of the rotor blade.

The cooling fluid, in particular compressed air, needs to be protected or suppressed to join the main gas stream that drives the rotor blades in order to rotate the rotation shaft. For suppressing the compressed cooling air to enter or join the main gas stream, seals are arranged at a number of locations of the turbine section of the gas turbine.

The turbine section may comprise one or more rotor disks that carry rotor blades. On each disk, plural rotor blades are mounted spaced apart in the circumferential direction.

In a conventional gas turbine between circumferentially adjacent rotor blades, a sealing strip may be provided that contacts metal surfaces of adjacent platform sections of adjacent rotor blades, in order to seal cooling air from leaking from a radially inward cavity radially outwards into the main gas stream. Currently, the sealing strips between each blade rely on metal to metal contact to provide the best seal. The metal to metal contact and in general the sealing property may often be compromised by slight blade to blade dimensional tolerances and seating of the seal or the sealing strip.

There might be a need for a sealing part for a turbine section of a gas turbine, for a rotor blade arrangement comprising the sealing part, for a gas turbine and for a method for manufacturing a sealing part for a turbine section of a gas turbine, wherein a reliable effective sealing is provided, wherein an easy manufacturing is enabled.

### Summary of the Invention

The need may be satisfied by the subject-matter of the independent claims directed to a sealing part, to a rotor blade arrangement, to a gas turbine and directed to a method for manufacturing a sealing part for a turbine section of a gas turbine.

According to an embodiment of the present invention, it is provided a sealing part (in particular a sealing strip) for a turbine section of a gas turbine to seal a gap between two circumferentially adjacent rotor blades, comprising a body; a coating applied on a surface of the body, the coating comprising a soft heat resisting material that can deform under centrifugal force of the rotating rotor blades.

The sealing part may form a part of a seal that suppresses or even prohibits transfer or leakage of cooling air towards a main gas path of a gas turbine. In the turbine section of the gas turbine, exhaust gas from one or more combustors impact on plural rotor blades mounted on one or more rotor disks, causing rotation of a rotation shaft to which the rotor blades are connected. The rotation shaft rotates around an axis oriented in the axial direction. The radial direction is perpendicular to the axial direction. The circumferential direction is perpendicular to the radial direction and the axial direction.

The body may be manufactured from a metal, in particular including Nickel. The body may in particular comprise HAYNES 230 or NIM 75 or other alloys, in particular Nickel-containing alloys. The coating may also comprise one or more metals, in particular Aluminum. The surface onto which the coating is applied may, in a rotor blade arrangement, be in direct physical contact with a surface of a (slot portion of a) platform portion of adjacent rotor blades.

When the surface onto which the coating is applied contacts and is pressed onto the surface of the respective platform portion of the respective rotor blade, a tight contact, in particular due to centrifugal forces, may be established suppressing or even prohibiting flow through or leakage of cooling air (in particular present regularly inward from the sealing part) to a main gas part (located radially outwards of the sealing part). Thereby, in particular, a seal may be formed by the sealing part and corresponding surfaces of the platform portions onto which the sealing part is pressed during operation of the gas turbine.

The coating comprises a material which is deformable under typical forces due to the rotation of the rotation shaft. The material used for applying the coating may have a hardness which may be between 20 and 75 on the HB (Brinell) scale that characterizes the indentation hardness of materials through the scale of penetration of an indenter, loaded on a material test-piece. Pure Aluminum may have e.g. a hardness of about 15 HB, copper has a hardness of 35 HB and mild steel has a hardness of 120 HB.

When the coating material can deform, the coating may adapt or fit to the corresponding mating surfaces of slots within the adjacent platform portions of the adjacent rotor blades. Thereby, the sealing properties may be improved. Thereby, the sealing efficiency including reducing leakage may be improved and therefore the turbine efficiency may be increased. Further, a fast response to current under the platform cooling issues, along with design changes may reduce the number of blade failures.

According to an embodiment of the present invention, the coating comprises Aluminum, in particular inorganic Aluminum. Thereby, a suitable soft material may be provided that can deform under typical forces due to centrifugation of the rotating rotor blades and is heat resisting.

According to an embodiment of the present invention, the coating is applied on only one side of the body. Thereby, the manufacturing may be simplified and costs may be reduced. Only that side of the body which is pressed during operation towards and onto an opposing mating face within slots of the adjacent platform portions may be needed to be coated, in order to improve sealing efficiency.

According to an embodiment of the present invention, a thickness of the coating amounts to 0.5% to 10% of a thickness of the body, in particular 0.050 mm to 0.5 mm. Having this thickness of the coating, a sufficient deformation may take place, in order to improve the sealing properties. Other values of the thickness are possible.

According to an embodiment of the present invention, the sealing part is shaped as a strip. The strip may be straight or at least partly bent depending on the application and geometry of corresponding slots within the platform portion of the rotor blade. Thereby, conventional platform portions of rotor blades may be equipped with the sealing part without major re-design.

According to an embodiment of the present invention, the seal is shaped as a bent or straight rectangular strip having a long side and a short side having a length between 5% and 20% of a length of the long side. Thereby, a number of types and geometries of conventional rotor blades may be supported.

According to an embodiment of the present invention, the body is made of a Nickel-based material. Nickel-based material may provide a sufficient strength and reliability in high temperature environments as encountered during operation of the gas turbine.

According to an embodiment of the present invention it is provided a rotor blade arrangement, comprising a first platform portion of a first blade unit, the first platform portion having a first slot portion; a second platform portion of a second blade unit, the second platform portion having a second slot portion and being arranged circumferentially adjacent to the first platform portion; and a sealing part according to one of the preceding embodiments, wherein the sealing part is inserted in a slot formed by the first slot portion and the second slot portion, to bridge a platform gap between the two circumferentially adjacent platform portions and to suppress fluid transmission through the gap, in particular to suppress cooling fluid to leak into a main gas stream, wherein the side of the sealing part where the coating is applied faces radially outwards.

A blade unit may comprise an aerofoil section, a platform section and an engaging section. The aerofoil section may be arranged within the main gas path to be exposed to the exhausted combustion gas. The aerofoil section may be mounted on the platform section onto which in turn the engaging section is mounted. The engaging section may allow to (releasably) connect the rotor blade unit to the rotor disk. In particular, the engaging section may resemble a firtree geometry. To mount the blade unit to the rotor disk, the blade unit may be slit by movement along the axial direction into an engaging slot of the rotor disk also resembling a (though complementary) firtree geometry including radially alternating lopes and fillets. To fix the blade unit relative to the rotor disk in an axial direction, a locking plate on both axial ends of the respective engaging sections may be used and fixed.

When the circumferentially adjacent first blade unit and the second blade unit are connected to the rotor disk, the first slot portion and the second slot portion may be located approximately at a same radial range. However, a platform gap between the first platform portion and the second platform portion may be formed. The sealing part inserted into the slot formed by the first slot portion and the second slot portion may bridge this gap. In particular, the sealing part may be pressed, during operation, with the side having the coating applied towards mating surfaces provided within the first slot portion and the second slot portion to suppress or prohibit cooling air flow through the interface between the mating surfaces and the coating of the sealing part.

According to an embodiment of the present invention, the first slot portion, the second slot portion and the sealing part are dimensioned such that the sealing part can move to some degree in the circumferential and the radial direction. During rotation of the rotor disk and thus also rotation of the rotor blades including the platform sections, the sealing part may be pressed radially outwards and may therefore contact radially inwards directed limiting surfaces of the first slot portion and the second slot portion. The coating of the sealing part may then (partially) deform to adapt its shape according to the actual geometry and size of the gap between the platform section and the geometry (and/or surface topology) of the opposing mating surfaces within the first slot portion and the second slot portion.

According to an embodiment of the present invention, the first slot portion comprises as limiting border for the sealing part a first radially inner surface, wherein during rotation of the first platform portion the coated side of the sealing part is pressed due to centrifugal force towards the first radially inner surface.

Also the second slot portion may comprise as a limiting border for the sealing part a second radially inner surface, wherein during rotation of the second platform portion the coated side of the sealing part is pressed due to centrifugal force towards the second radially inner surface within the second slot portion of the second platform portion. Thereby, a seal may be formed by the first radially inner surface, the second radially inner surface and the sealing part closely contacting with the side where the coating is applied the radially inner surfaces. Because the coating is deformable (to a certain degree), irregularity of the first radially inner surface and/or the second radially inner surface (in particular irregularities deviating from a plan or flat surface) may be compensated.

According to an embodiment of the present invention, a thickness of the coating is smaller in a circumferential region of the first radially outer surface than in a circumferential region of the platform gap. The thickness of the coating may originally be homogeneous or equal across an entire surface of the sealing part. However, due to deformation during operation, the thickness of the coating may change and the thickness may become different in different circumferential regions. Where the gap is between the platform portions, the thickness may therefore be larger than in regions where the radially inner surfaces are arranged.

According to an embodiment of the present invention it is provided a gas turbine comprising a rotor blade arrangement according to one of the above described embodiments. The gas turbine may comprise plural rotor blade arrangements and may further comprise a compressor section, and a combustion section.

The rotor blade arrangement may comprise an entire rotor disk having attached thereto plural blade units. Each of the blade units may comprise a platform portion having a corresponding slot portion so that circumferentially between adjacent blade units, a seal may be formed by a sealing part and mating radially inner surfaces of corresponding slot portions of corresponding platform portions.

It should be understood that features which are individually or in any combination disclosed, described, employed or provided for a sealing part for a turbine section of a gas turbine, for a rotor blade arrangement or for a gas turbine may also be applied, individually or in any combination, to a method for manufacturing a sealing part for a turbine section of a gas turbine and vice versa according to embodiments of the present invention.

According to an embodiment of the present invention it is provided a method for manufacturing a sealing part for a turbine section of a gas turbine to seal a gap between two circumferentially adjacent rotor blades, the method comprising providing a body made of a Nickel based material as a sheet; coating a surface of the body with a soft, heat resisting material that can deform under centrifugal force of the rotating rotor blades; and cutting plural seal strips out of the coated sheet.

The body may be a conventionally available body manufactured in a conventional manner. The coating may be applied in a number of techniques. For example, a wet coating, a thermal coating, a spray coating or even a dry coating may be applied. Different spraying techniques, such as high velocity oxy fuel spraying using a continuous or a discontinuous gun may be applied. Further, coating material may be immersed in a liquid and may be sprayed onto the surface for coating. The material immersed in the liquid may be in a powder form or in form of flakes or grains.

The coating may also comprise one or more fixing or curing steps, such as thermal heating. The coating may comprise performing one or more times spraying Aluminum, in particular Aluminum flakes immersed in a liquid inorganic binder onto the surface and curing at elevated temperature. The curing may for example involve heating to between 300°C and 380°C. Thereby, a number of coating layers may be applied one after each other. For applying the coating, a spraying gun, similar to a spraying gun used for spraying a color on a car may be used.

The cutting may in particular comprise laser cutting or other techniques.

According to an embodiment of the present invention, the manufacturing method may further comprise applying a protection layer over the coated surface before the cutting and removing the protection layer from the coated surface after the cutting. The protection layer may for example comprise taping the coated surface using a tape or applying a plastic sheet. Thereby, masking and protection of the coating may be established.

In particular, according to an embodiment of the present invention, a sheet of seal material or body material may first be coated with an inorganic Aluminum coating such as water based Sermetel 725. The coated sheet may then be covered with a masking material, either plastic sheet or masking tape (protection during the processing). Then, sealing parts, for example in the form of strips, may be laser-cut and any bending of the strips may be performed as necessary. Further, the edges or corners of the strips may be finished in a conventional manner. Later on, the masking layer or protection layer may be removed. Then, the strips may be fitted into the corresponding slot in a conventional manner. During operation of the gas turbine (rotation of the rotor blades), the inorganic Aluminum coating may deform slightly in place providing a greater efficiency of the seal.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Fig. 1 schematically illustrates a gas turbine in a sectional view according to an embodiment of the present invention;
Fig. 2 schematically illustrates in a cross-sectional view a rotor blade arrangement according to an embodiment of the present invention which may be included in the gas turbine illustrated in Fig. 1;
Fig. 3 schematically illustrates a portion of the rotor blade arrangement illustrated in Fig. 2;
Fig. 4 schematically illustrates a cross-sectional view of a portion of the rotor blade arrangement illustrated in Figs. 2 and 3;
Fig. 5 schematically illustrates a method step during manufacturing of a sealing part according to an embodiment of the present invention;
Fig. 6 schematically illustrates a sealing part according to an embodiment of the present invention;
Figs. 7 and 8 schematically illustrate in a cross-sectional view a sealing part according to embodiments of the present invention before and during or after usage in a gas turbine.

### Detailed Description

The illustration in the drawings is in schematic form.

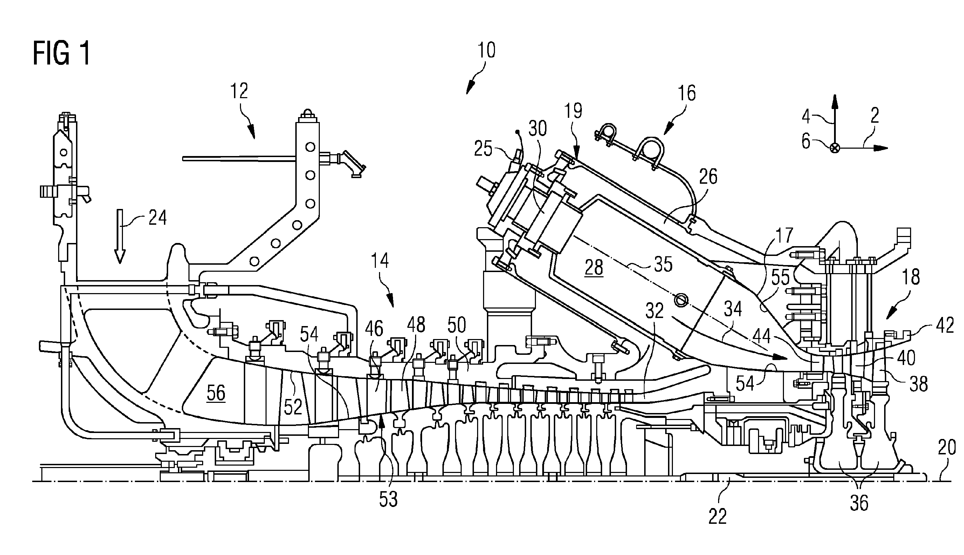

In Figs. 1, 2, 3 and 4 the axial direction is labelled with reference sign 2, the radial direction is labelled with reference sign 4 and the circumferential direction is labelled with reference sign 6.

**Fig. 1** shows an example of a gas turbine engine 10 in a sectional view. The gas turbine engine 10 comprises, in flow series, an inlet 12, a compressor section 14, a combustor section 16 and a turbine section 18 which are generally arranged in flow series and generally about and in the direction of a longitudinal or rotational axis 20. The gas turbine engine 10 further comprises a shaft 22 which is rotatable about the rotational axis 20 and which extends longitudinally through the gas turbine engine 10. The shaft 22 drivingly connects the turbine section 18 to the compressor section 14.

In operation of the gas turbine engine 10, air 24, which is taken in through the air inlet 12 is compressed by the compressor section 14 and delivered to the combustion section or burner section 16. The burner section 16 comprises a burner plenum 26, one or more combustion chambers 28 and at least one burner 30 fixed to each combustion chamber 28. The combustion chambers 28 and the burners 30 are located inside the burner plenum 26. The compressed air passing through the compressor 14 enters a diffuser 32 and is discharged from the diffuser 32 into the burner plenum 26 from where a portion of the air enters the burner 30 and is mixed with a gaseous or liquid fuel. The air/fuel mixture is then burned and the combustion gas 34 or working gas from the combustion is channelled through the combustion chamber 28 to the turbine section 18 via a transition duct 17.

This exemplary gas turbine engine 10 has a cannular combustor section arrangement 16, which is constituted by an annular array of combustor cans 19 each having the burner 30 and the combustion chamber 28, the transition duct 17 has a generally circular inlet that interfaces with the combustor chamber 28 and an outlet in the form of an annular segment. An annular array of transition duct outlets form an annulus for channelling the combustion gases to the turbine 18.

The turbine section 18 comprises a number of blade carrying discs 36 attached to the shaft 22. In the present example, two discs 36 each carry an annular array of turbine blades 38. However, the number of blade carrying discs could be different, i.e. only one disc or more than two discs. In addition, guiding vanes 40, which are fixed to a stator 42 of the gas turbine engine 10, are disposed between the stages of annular arrays of turbine blades 38. Between the exit of the combustion chamber 28 and the leading turbine blades 38 inlet guiding vanes 44 are provided and turn the flow of working gas onto the turbine blades 38.

The combustion gas from the combustion chamber 28 enters the turbine section 18 and drives the turbine blades 38 which in turn rotate the shaft 22. The guiding vanes 40, 44 serve to optimise the angle of the combustion or working gas on the turbine blades 38.

The turbine section 18 drives the compressor section 14. The compressor section 14 comprises an axial series of vane stages 46 and rotor blade stages 48. The rotor blade stages 48 comprise a rotor disc supporting an annular array of blades. The compressor section 14 also comprises a casing 50 that surrounds the rotor stages and supports the vane stages 48. The guide vane stages include an annular array of radially extending vanes that are mounted to the casing 50. The vanes are provided to present gas flow at an optimal angle for the blades at a given engine operational point. Some of the guide vane stages have variable vanes, where the angle of the vanes, about their own longitudinal axis, can be adjusted for angle according to air flow characteristics that can occur at different engine operations conditions.

The casing 50 defines a radially outer surface 52 of the passage 56 of the compressor 14. A radially inner surface 54 of the passage 56 is at least partly defined by a rotor drum 53 of the rotor which is partly defined by the annular array of blades 48.

The present invention is described with reference to the above exemplary turbine engine having a single shaft or spool connecting a single, multi-stage compressor and a single, one or more stage turbine. However, it should be appreciated that the present invention is equally applicable to two or three shaft engines and which can be used for industrial, aero or marine applications.

The terms upstream and downstream refer to the flow direction of the airflow and/or working gas flow through the engine unless otherwise stated. The terms forward and rearward refer to the general flow of gas through the engine. The terms axial, radial and circumferential are made with reference to the rotational axis 20 of the engine.

The turbine section 18 includes two rows of disks 36 to which rotor blades 38 are attached. Each row of the row of disks 36 having attached the blades 38 comprises plural rotor disk portions each having one blade unit attached. The rotor disk portions are configured according to an arrangement for a gas turbine according to an embodiment of the present invention.

In the turbine section 18, the gas turbine 10 comprises two axially spaced apart rotor disks 36 at which rotor blades 38 are mounted. The rotor blades 38 in each of the rotor disks 36 are sealed circumferentially between the adjacent rotor blade units 38 using a sealing part according to an embodiment of the present invention, as it is included in a rotor blade arrangement according to an embodiment of the present invention.

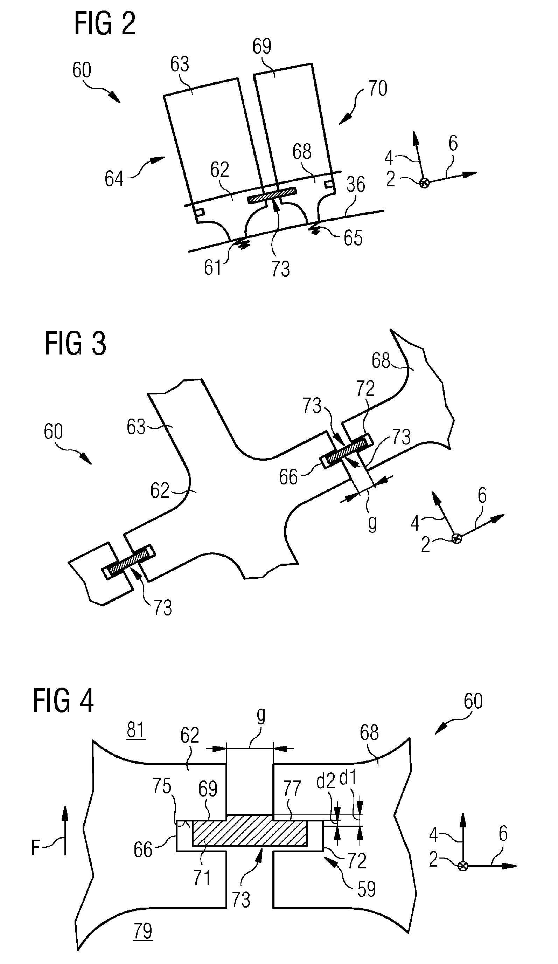

Such a rotor blade arrangement 60 is schematically, in a cross-sectional view viewing along the axial direction 2 illustrated in **Fig. 2** and in closer looks in **Figs. 3** and **4** (views along the axial direction 2,). The rotor blade arrangement 60 comprises a first platform portion 62 of a first blade unit 64, wherein the first platform portion 62 has a first slot portion 66. The rotor blade arrangement 60 further comprises a second platform portion 68 of a second blade unit 70, wherein the second platform portion has a second slot portion 72 and is arranged circumferentially adjacent to the first platform portion 62.

Furthermore, the first blade unit 64 comprises an aerofoil section 63 and also the second blade unit 70 comprises an aerofoil section 69 both aerofoil sections 63, 69 being arranged radially outwards from the respective platform sections 62, 68. By using engagement portions 61, 65, the first rotor blade unit 64 and the second rotor blade unit 70 is mounted on a rotor disk 36 which is in Fig. 2 only partially shown. In reality, the rotor disk 36 spans a full circumference and has plural rotor blade units mounted thereon across the entire circumference.

The rotor blade arrangement 60 further comprises a sealing part 73 which is inserted in a slot 59 that is formed by the first slot portion 66 and the second slot portion 72. The sealing part 73 bridges a gap g between the (ends of the) two circumferentially adjacent platform portions 62, 68. Thereby, in operation, the sealing part 73 presses radially outwards onto a first radially inward surface 75 of the first slot portion 66 and onto a second radially inner surface 77 of the second slot portion 72 of the second platform portion 68. Thereby, during operation of the rotor blade arrangement 60 and operation of the gas turbine 10 illustrated in Fig. 1, cooling air present in the cavity 79 radially inwards from the sealing part 73 is suppressed or even prohibited from leaking into the main gas path 81 into which the aerofoil sections 63, 69 of the first rotor blade unit 64 and the second rotor blade unit 70 protrude.

For providing this sealing property, the sealing part 73 comprises a body 71 and a coating 69 applied on its radially outward facing surface, i.e. on this side which is in physical contact and thereby mates with the radially inner surfaces 75, 77 of the respective slot portions 66, 72.

As can be appreciated from Fig. 4, the thickness of the coating 69 has different values along the circumferential direction 6. In the circumferential range, where the gap g is located, the thickness of the coating 69 amounts to d1, while the thickness in the circumferential region or range of the radially inner surfaces 75, 77 amounts to d2 which is smaller than d1. The different thicknesses d1, d2 are due to deformation of the coating 69 during operation of the rotor blade arrangement 60 or operation of the gas turbine 10. During operation, the centrifugal force F pushes the sealing part 73 against the radially inner surfaces 75, 77 which are however not present in the range where the gap g is located. Therefore, in the circumferential range where the gap g is present, the coating 69 is not diminished due to the centrifugal force F.

As can also be appreciated from Fig. 4, viewed along the axial direction 2, the sealing part 73 has a smaller circumferential and also radial extent than the slot 59 formed by the first slot portion 66 and the second slot portion 72. Therefore, the sealing part 73 can, to a certain degree, move within the slot 59 and adapt to the shape and geometry of the radially inner surfaces 75, 77 and adapt to the location and geometry of the gap g.

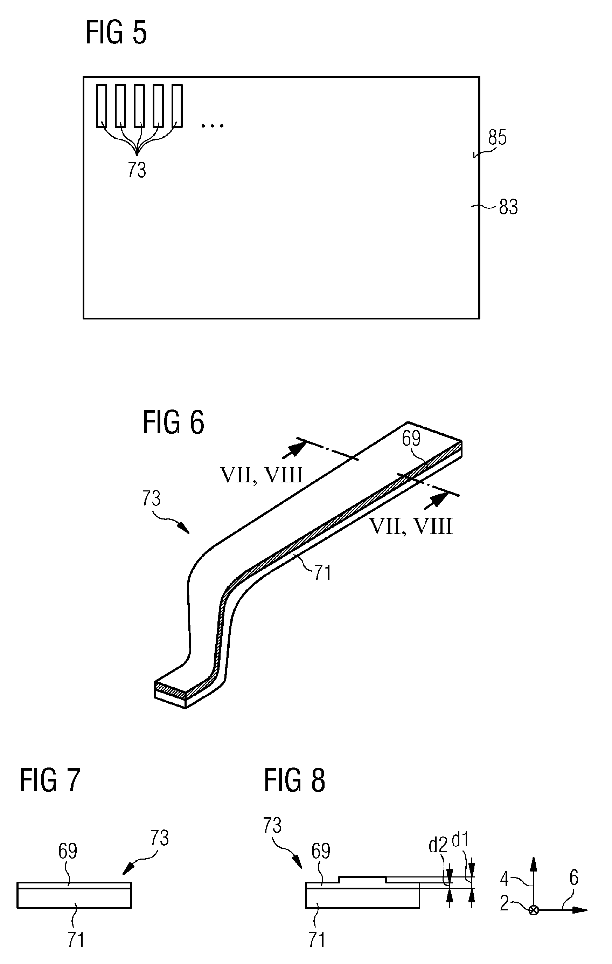

**Fig. 5** illustrates one method step during a method for manufacturing a sealing part according to an embodiment of the present invention. In a first method step, a body made of a Nickel-based material as a sheet is provided (sheet 83).

In a not explicitly illustrated method step, a surface 85 of the sheet 83 is coated with a soft, heat-resisting material that can deform under centrifugal force of the rotating rotor blades. The coating may for example comprise spraying Aluminum, in particular Aluminum flakes immersed in a liquid inorganic binder onto the surface and curing at elevated temperature. One or several such coating layers may be applied to the surface 85.

Optionally, the coated surface may then be masked by applying a protection, such as a tape or a plastic sheet. In a next method step, several sealing parts 73 may be cut out from the sheet 83, in particular involving laser cutting. If a protection layer had been applied before the cutting out the sealing parts 73, the protection layer may then be removed.

The full sheet 83 may be coated and laser cut and may be bent and fit normally. As inorganic Aluminum coating, Sermetel 725 or similar may be used.

If appropriate, the sealing part, here formed as a strip, may be bent, in order to arrive at a bent sealing strip 73 as illustrated in **Fig. 6** in a perspective view. The coating 69 may be applied only on one side of the body 71.

**Figs. 7 and 8** schematically illustrate the sealing part 73 in a cross-sectional view when a cross-section is applied as indicated in Fig. 6. Fig. 7 illustrates the sealing part 73 immediately after manufacturing and before usage within a gas turbine 10 or a rotor blade arrangement 60. As can be seen in Fig. 7, the coating 69 has a same thickness across an entire extent of the body 71.

After the sealing part or sealing strip 73 had been used within the gas turbine 10 or the rotor blade arrangement 60, the cross-sectional view as illustrated in Fig. 8 evolves. It can be seen that the thickness of the coating 69 varies along the circumferential direction 6, as has already been explained with respect to Fig. 4. In the circumferential region of the gap g, the thickness amounts to d1, while in the circumferential range outside the gap, the thickness amounts to d2 which is smaller than d1.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

### List of reference signs:

- 2: axial direction
- 4: radial direction
- 6: circumferential direction
- 10: gas turbine engine
- 12: inlet
- 14: compressor section
- 16: combustor section
- 17: transition duct
- 18: turbine section
- 20: rotational axis
- 22: shaft
- 24: air
- 26: burner plenum
- 28: combustion chamber
- 30: burner
- 32: diffuser
- 34: combustion gas
- 36: rotor disk
- 38: turbine blade
- 40: guiding vane
- 42: stator
- 46: vane stage
- 48: rotor blade stage
- 50: casing
- 52: outer surface
- 56: passage
- 59: slot
- 60: rotor blade arrangement
- 62, 68: platform portion
- 64, 70: rotor blade units
- 63, 69: aerofoil sections
- 61, 65: engaging sections
- 66, 72: slot portions
- g: gap
- 69: coating
- 71: body
- 73: sealing part
- 75, 77: radially inner surfaces (mating surfaces)
- 79: cooling air filled cavity
- 81: main gas stream path
- d1, d2: thicknesses
- 83: sheet
- 85: sheet surface

## Claims

1. Sealing part (73) for a turbine section (18) of a gas turbine (10) to seal a gap (g) between two circumferentially adjacent rotor blades (64, 70), comprising:
a body (71);
a coating (69) applied on a surface of the body (71), the coating comprising a soft heat resisting material that can deform under centrifugal force of the rotating rotor blades (63, 70).

2. Sealing part according to claim 1, wherein the coating (69) comprises Aluminum, in particular inorganic Alumumium.

3. Sealing part according to claim 1 or 2, wherein the coating (69) is applied on only one side of the body.

4. Sealing part according to one of the preceding claims, wherein a thickness (d1, d2) of the coating amounts to 0.5 % to 10 % of a thickness of the body (71), in particular 0.050 mm to 0.5 mm.

5. Sealing part according to one of the preceding claims, wherein the sealing part (73) is shaped as a strip.

6. Sealing part according to one of the preceding claims, wherein the sealin part is shaped as a bent or straight rectangular strip having a long side and a short side having a length between 5 % and 20% of a length of the long side.

7. Sealing part according to one of the preceding claims, wherein the body (71) is made of a Nickel based material.

8. Rotor blade arrangement (60), comprising:
a first platform portion (62) of a first blade unit (64), the first platform portion having a first slot portion (66) ;
a second platform portion (68) of a second blade unit (70), the second platform portion (68) having a second slot portion (72) and being arranged circumferentially adjacent to the first platform portion (62); and
a sealing part (73) according to one of the preceding claims, wherein the sealing part is inserted in a slot (59) formed by the first slot portion (66) and the second slot portion (72), to bridge a platform gap (g) between the two circumferentially adjacent platform portions (62, 68) and to suppress fluid transmission through the gap, in particular to suppress cooling fluid to leak into a main gas stream (81),
wherein the side of the sealing part (73) where the coating (69) is applied faces radially outwards.

9. Rotor blade arrangement (60) according to claim 8, wherein the first slot portion (66), the second slot portion (72) and the sealing part are dimensioned such that the sealing part (73) can move to some degree in the circumferential direction (6) and the radial direction (4).

10. Rotor blade arrangement according to claim 8 or 9, wherein the first slot portion (66) comprises as limiting border for the sealing part a first radially inner surface (5),
wherein during rotation of the first platform portion (62) the coated side of the sealing part (73) is pressed due to centrifugal force towards the first radially inner surface (75).

11. Rotor blade arrangement according to one of claims 8 to 10, wherein a thickness (d1, d2) of the coating is smaller in a circumferential region of the first radially outer surface (75) than in a circumferential region of the platform gap (g).

12. Gas turbine (10), comprising a rotor blade arrangement (60) according to one of claims 8 to 11.

13. Method for manufacturing a sealing part (73) for a turbine section (18) of a gas turbine (10) to seal a gap (g) between two circumferentially adjacent rotor blades (64, 70), the method comprising:
providing a body (71) made of a Nickel based material as a sheet (83);
coating a surface of the body (83) with a soft, heat resisting material that can deform under centrifugal force of the rotating rotor blades; and
cutting plural seal strips (73) out of the coated sheet.

14. Method according to claim 13, the coating comprising:
performing one or more times:
spraying Aluminum, in particular Aluminum flakes immersed in a liquid inorganic binder onto the surface; and
curing at elevated temperature.

15. Method according to claim 13 or 14, further comprising:
applying a protection layer over the coated surface before the cutting;
removing the protection layer from the coated surface after the cutting.
